# EUROPEAN PATENT SPECIFICATION

(11) **EP 3 247 020 B1**
(45) Date of publication and mention of the grant of the patent: **15.05.2019**
(21) Application number: 15877764.9
(22) Date of filing: 21.12.2015
(51) Int. Cl.: H02J 7/00, G06F 1/16, G06F 1/26

(54) **ELECTRONIC DEVICE**
ELEKTRONISCHE VORRICHTUNG
DISPOSITIF ÉLECTRONIQUE

(30) Priority: 16.01.2015 JP 2015007167
(43) Date of publication of application: 22.11.2017
(73) Proprietor: Panasonic Intellectual Property Management Co., Ltd., Osaka-shi, Osaka 540-6207 (JP)
(72) Inventor: MASAOKA, Satoru, Osaka-shi Osaka 540-6207 (JP); YOKOYAMA, Yasuyuki, Osaka-shi Osaka 540-6207 (JP)
(74) Representative: Grünecker Patent- und Rechtsanwälte PartG mbB
(86) International application number: PCT/JP2015/006349
(87) International publication number: WO 2016/113809

(56) References cited:
- EP-A2- 0 736 828
- EP-A2- 0 905 853
- JP-A- H04 155 422
- JP-A- H08 336 242
- JP-A- 2013 037 673
- JP-A- 2014 059 619
- JP-B2- 3 545 129
- US-A1- 2014 082 394

## Description

### TECHNICAL FIELD

The present disclosure relates to a battery-drivable electronic device.

### BACKGROUND ART

PTL1 discloses a wireless communication device that can be equipped with two batteries. This wireless communication device operates in a predetermined operating mode by receiving electric power from a built-in first battery, when a detachable second battery is removed.

PTL 2 discloses an information processing device to which two easily-detachable batteries are connectable. This information processing device detects opening and closing of two covers provided to housing units for the two batteries respectively, and switches a battery for supplying power to the information processing device based on a detection result.

### Citation List

### Patent Literature

PTL 1: Unexamined Japanese Patent Publication No. 2010-130258
PTL 2: Unexamined Japanese Patent Publication No. 2009-268341

EP 0 736 828 A2 relates to an electronic apparatus that comprises a main circuit having a main CPU and a power supply system which includes plural main batteries for supplying operating power to said main circuit, a back-up battery, switching means connected between each main battery and the main circuit, starting means for enabling the operation of the main circuit, detection means for detecting the charging level of each main battery, and power control means responsive to the starting means and the detection means and having a sub-CPU for individually controlling the switching means according to either a single-connection mode or a multiple-connection mode. In the single-connection mode only one of the main batteries is connected to said main circuit. In the multiple-connection mode, at least two main batteries, each in series with a respective diode means, are connected in parallel to the main circuit. The back-up battery is connected to supply power to the power control means only when either no main battery is installed or the charging level of each of the installed main batteries is below a predetermined value required for back-up operation.

EP 0 905 853 A2 relates to an electronic device including an internal battery and an expansion battery that cannot be operated when the charge in both batteries is drained. Accordingly, when charging the batteries, a control circuit, after confirming that the internal battery is not fully charged, sets an FET to a conductive state and an FET to a non-conductive state. The result is that charging occurs from the internal battery provided the internal battery is not fully charged. After the internal battery is fully charged, the control circuit sets the FET to a non-conductive state and the FET to a conductive state so that this time the expansion battery is charged. Thus, if a short operating time is sufficient, the internal battery can be rapidly charged so that the electronic equipment can be operated by itself after charging for only a short period.

US 2014/0082394 A1 relates to an electronic device that comprises a main battery used as a drive power source for driving the electronic device, a secondary battery used as a drive power source instead of the main battery when the main battery cannot be used, a battery detection unit that detects an event of removal of the main battery from the electronic device, and a power control unit that changes the drive power source from the main battery to the secondary battery and controls operation of the electronic device to reduce power consumption by the electronic device when removal of the main battery is detected by the battery detection unit.

JP 3 545129 B2 aims at preventing work from being aborted due to the exhaustion of a battery by providing this battery driving type personal computer with plural measuring means for measuring the residual capacity of a battery and a control means for connecting a battery with small residual capacity to a body part with priority.

### SUMMARY OF THE INVENTION

The invention provides an electronic device according to claim 1. Preferred embodiments are addressed in the dependent claims.

An electronic device according to the present disclosure is an electronic device that is operable by power supplied from a battery, the device includes a first mounting unit to which a first battery is mounted in a detachable manner, a second mounting unit to which a second battery different from the first battery is mounted in a detachable manner, and a built-in battery incorporated in a main body. The electronic device also includes: a first switch that alternatively selects a battery for supplying power to the electronic device from the first battery mounted to the first mounting unit and the second battery mounted to the second mounting unit; and a second switch that switches on and off a supply of power from the built-in battery to the electronic device. The electronic device also includes a first latch for locking the first battery mounted to the first mounting unit, a second latch for locking the second battery mounted to the second mounting unit, and a latch opening/closing detector for detecting opening and closing of the first latch and the second latch. The electronic device also includes: a battery remaining amount detector for detecting remaining amounts of the first battery and the second battery; and a power controller for controlling the first switch and the second switch. The power controller controls the first switch and the second switch based on detection results of the latch opening/closing detector and the battery remaining amount detector.

The electronic device according to the present disclosure can continuously operate for a long time using a plurality of batteries, for example, three batteries.

### BRIEF DESCRIPTION OF DRAWINGS

FIG. 1 is a perspective view of an electronic device according to a first exemplary embodiment.
FIG. 2 is a perspective view of a bottom surface of the electronic device according to the first exemplary embodiment.
FIG. 3A is a view for describing removal of a first battery from the electronic device according to the first exemplary embodiment.
FIG. 3B is a view for describing mounting of the first battery to the electronic device according to the first exemplary embodiment.
FIG. 4A is a view for describing removal of a second battery from the electronic device according to the first exemplary embodiment.
FIG. 4B is a view for describing mounting of the second battery to the electronic device according to the first exemplary embodiment.
FIG. 5 is a block diagram for describing a configuration of the electronic device according to the first exemplary embodiment.
FIG. 6 is a state transition diagram relating to states of a first switch and a second switch in the electronic device according to the first exemplary embodiment.
FIG. 7 is a flowchart of a process relating to power consumption reduction control in the electronic device according to the first exemplary embodiment.

### DESCRIPTION OF EMBODIMENTS

Exemplary embodiments will be described below in detail with reference to the drawings appropriately. However, detailed descriptions more than necessary might sometimes be omitted. For example, detailed descriptions of already known items and duplicated descriptions of substantially identical configurations might sometimes be omitted. Such omissions are for preventing following description from becoming redundant more than necessary, and for helping those skilled in the art easily understand the following description.

Note that the present inventors provide attached drawings and the following description for those skilled in the art to fully understand the present disclosure, and do not intend to limit the subject matter as described in the appended claims.

### FIRST EXEMPLARY EMBODIMENT

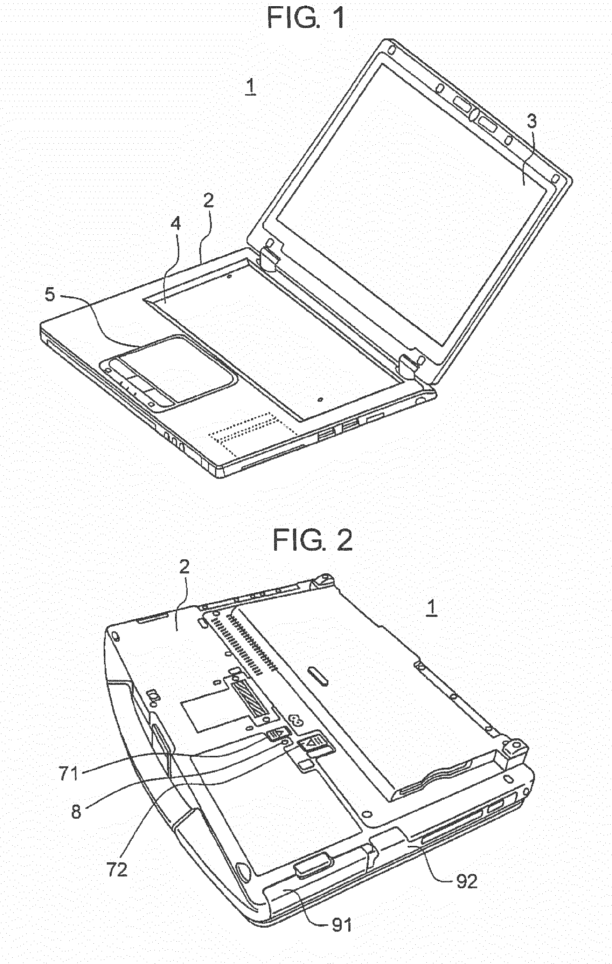

A first exemplary embodiment will be described below with reference to FIGS. 1 to 7.

### [1-1. Configuration]

FIG. 1 is a perspective view of an electronic device according to the first exemplary embodiment. Electronic device 1 is a so-called personal computer. As illustrated in FIG. 1, electronic device 1 which is a personal computer includes main body 2, display 3 serving as a display and connected to an end of main body 2 so as to be rotatable, and keyboard 4 and pointing device 5 provided on an upper surface of main body 2. Electronic device 1 includes a storage unit not illustrated. This storage unit stores an operating system and various application software programs. Electronic device 1 can provide various functions to a user by executing the operating system and application software programs.

FIG. 2 is a perspective view illustrating a configuration of a back surface of the electronic device according to the first exemplary embodiment. Electronic device 1 can be equipped with first battery 91 and second battery 92 detachably mounted into two slots provided on a side of electronic device 1. Both first battery 91 and second battery 92 are a rechargeable battery, and configured to be easily mounted and removed. Electronic device 1 also includes a built-in rechargeable battery (built-in battery) inside main body 2 as described later. Specifically, electronic device 1 can be equipped with three rechargeable batteries, that is, two detachable rechargeable batteries and the built-in rechargeable battery.

As illustrated in FIG. 2, electronic device 1 is provided with first latch 71, single light-emitting diode (LED) 8, and second latch 72 on almost the center of the back surface. First latch 71 locks mounted first battery 91 to main body 2. Second latch 72 locks mounted second battery 92 to main body 2. First latch 71 and second latch 72 are urged inside main body 2 by a member such as a spring, and are configured to keep in a closed state unless a user applies force in a direction of opening first latch 71 or second latch 72. LED 8 is a light-emitting element for notifying a user whether or not at least one of first battery 91 and second battery 92 can be removed and loaded while in operation of electronic device 1. In other words, LED 8 is a light-emitting element for notifying the user whether or not a so-called hot swap function can be used.

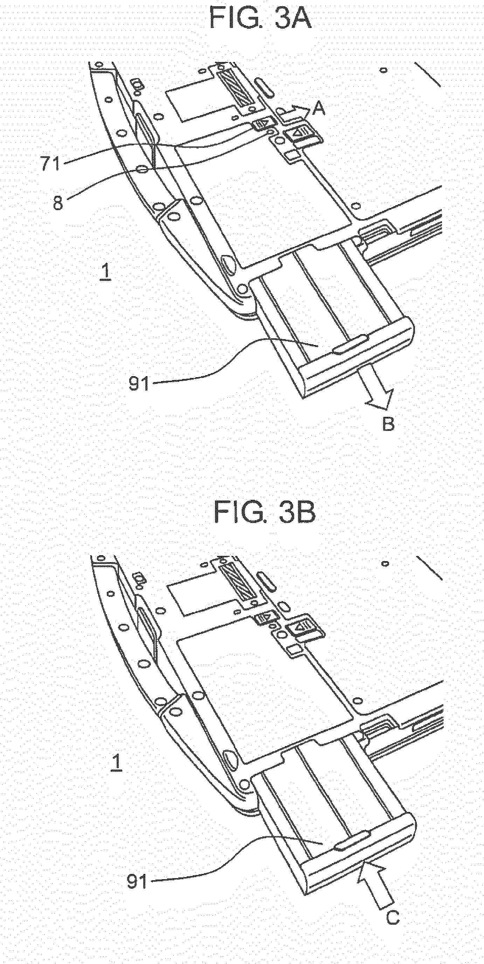

FIG. 3A is a view for describing a method for removing first battery 91 from the electronic device according to the first exemplary embodiment. To remove first battery 91 from electronic device 1, the user slides first latch 71 in a direction of arrow A, and pulls first battery 91 from main body 2 in a direction of arrow B while keeping first latch 71 in an open state. Thus, the user can easily remove first battery 91 from electronic device 1.

FIG. 3B is a view for describing a method for mounting first battery 91 to the electronic device according to the first exemplary embodiment. To mount first battery 91 to electronic device 1, the user inserts first battery 91 into the slot on the side of electronic device 1 in a direction of arrow C. Thus, the user can easily mount first battery 91 to electronic device 1.

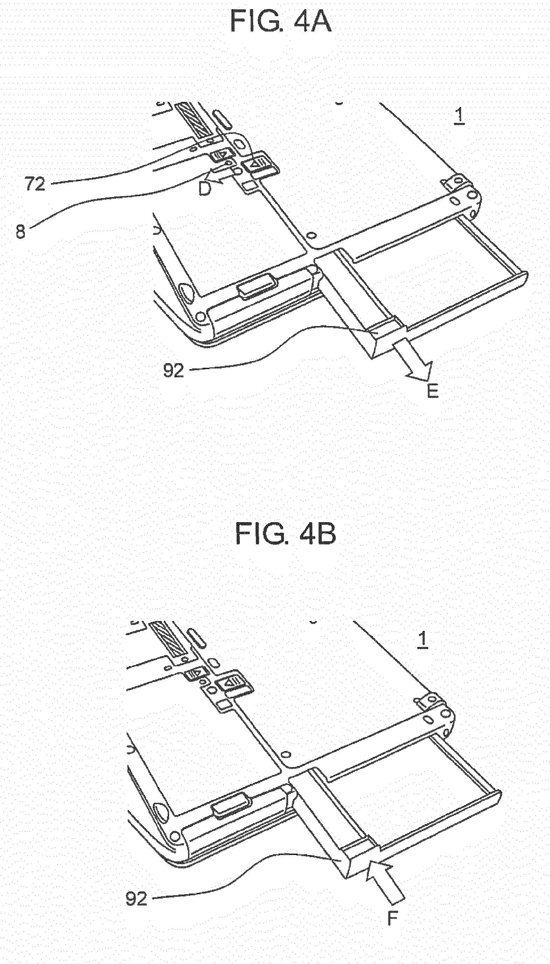

FIG. 4A is a view for describing a method for removing second battery 92 from the electronic device according to the first exemplary embodiment. To remove second battery 92 from electronic device 1, the user slides second latch 72 in a direction of arrow D, and pulls second battery 92 in a direction of arrow E while keeping second latch 72 in an open state. Thus, the user can easily remove second battery 92 from electronic device 1.

FIG. 4B is a view for describing a method for mounting second battery 92 to the electronic device according to the first exemplary embodiment. To mount second battery 92 to electronic device 1, the user inserts second battery 92 into the slot on the side of electronic device 1 in a direction of arrow F. Thus, the user can easily mount second battery 92 to electronic device 1.

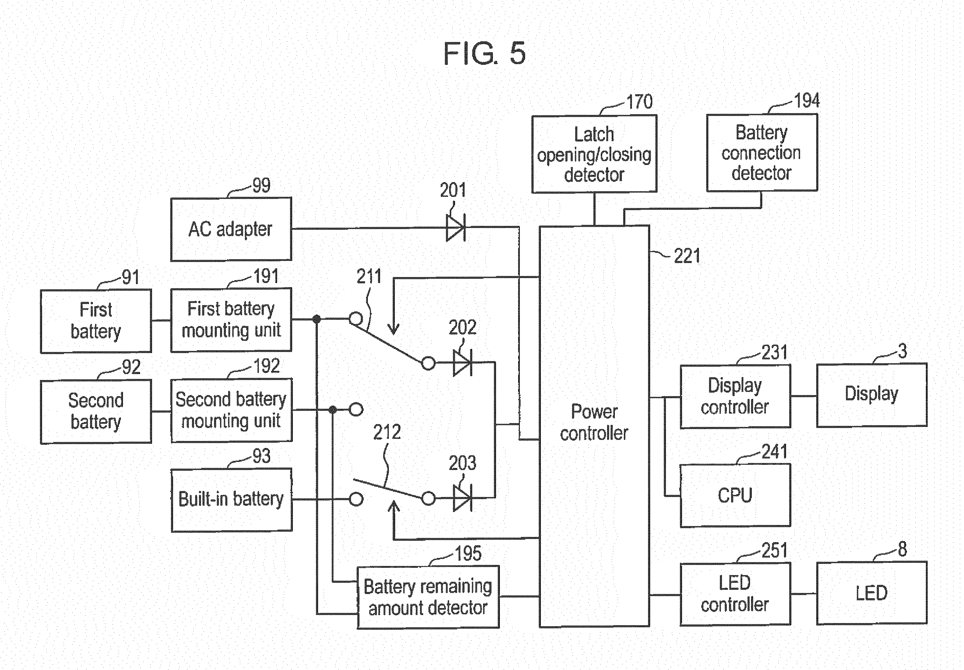

FIG. 5 is a block diagram illustrating a configuration of the electronic device according to the first exemplary embodiment. Electronic device 1 can use, as a power supply for electronic device 1, AC adapter 99, first battery 91 mounted to first battery mounting unit 191, second battery 92 mounted to second battery mounting unit 192, and built-in battery 93.

First battery 91 is a rechargeable battery having an output of 45 Wh, for example. First battery 91 is a main battery that is preferentially used when electronic device 1 is driven by a battery. First battery 91 is connected to a load including power controller 221 through first switch 211 and diode 202. Electronic device 1 can use power stored in first battery 91 by switching first switch 211 to first battery 91.

Second battery 92 is a rechargeable battery having an output of 33 Wh, for example. Second battery 92 is an auxiliary battery used when first battery 91 is unusable or other situations. Second battery 92 is connected to the load including power controller 221 through first switch 211 and diode 202. Electronic device 1 can use power stored in second battery 92 by switching first switch 211 to second battery 92.

Built-in battery 93 is a rechargeable battery having an output of 7 Wh, for example. Built-in battery 93 is a bridge battery for implementing a function (hot swap function) for replacing and loading first battery 91 or second battery 92 while in operation of electronic device 1. Built-in battery 93 is connected to the load including power controller 221 through second switch 212 and diode 203. Electronic device 1 can use power stored in built-in battery 93 by turning on second switch 212. In the present exemplary embodiment, built-in battery 93 is configured not to be easily removed from the main body. However, built-in battery 93 may be configured to be detachable from the main body.

Diode 202 and diode 203 are connected in parallel to the load. According to this configuration, when electronic device 1 is driven by battery, power is supplied to the load from one of diode 202 and diode 203 which has a higher potential.

Battery remaining amount detector 195 measures output voltages of first battery 91 and second battery 92, and detects remaining amounts of first battery 91 and second battery 92 based on the measurement results. The detection results of battery remaining amount detector 195 are transmitted to power controller 221. In the present exemplary embodiment, single battery remaining amount detector 195 detects the remaining amounts of first battery 91 and second battery 92. However, a plurality of battery remaining amount detectors 195 for respectively detecting the remaining amounts of first battery 91 and second battery 92 may be provided.

Latch opening/closing detector 170 detects an opening/closing state of each of first latch 71 (see FIG. 3A) and second latch 72 (see FIG. 4A). The detection result of latch opening/closing detector 170 is transmitted to power controller 221. Note that the method for detecting an opening/closing state is not particularly limited in the present exemplary embodiment. In the present exemplary embodiment, single latch opening/closing detector 170 detects the opening/closing state of each of first latch 71 and second latch 72. However, a plurality of latch opening/closing detectors 170 for respectively detecting an opening/closing state of each of first latch 71 and second latch 72 may be provided.

First latch 71 being in an open state means that first latch 71 is slid in the direction of arrow A in FIG. 3A, so that first battery 91 is detachable relative to first battery mounting unit 191. First latch 71 being in a closed state means that force is not applied to first latch 71, and first battery 91 cannot be mounted and removed, at least cannot be removed, relative to first battery mounting unit 191. Similarly, second latch 72 being in an open state means that second latch 72 is slid in the direction of arrow D in FIG. 4A, so that second battery 92 is detachable relative to second battery mounting unit 192. Second latch 72 being in a closed state means that force is not applied to second latch 72, and second battery 92 cannot be mounted and removed, at least cannot be removed, relative to second battery mounting unit 192.

Battery connection detector 194 detects whether or not first battery 91 is mounted to first battery mounting unit 191 and whether or not second battery 92 is mounted to second battery mounting unit 192. The detection result of battery connection detector 194 is transmitted to power controller 221. Note that the method for detecting connection is not particularly limited in the present exemplary embodiment. In the present exemplary embodiment, single battery connection detector 194 detects whether or not first battery 91 and second battery 92 are mounted. However, a plurality of battery connection detectors 194 for respectively detecting mounting of first battery 91 and second battery 92 may be provided.

Power controller 221 is a processor performing power control of electronic device 1. Power controller 221 is an embedded controller (EC) microcontroller. It is to be noted that power controller 221 is not limited to EC microcontroller. Power controller 221 receives power supplied from first battery 91 or the like and supplies the received power to each component of electronic device 1.

In addition, power controller 221 controls first switch 211 and second switch 212 based on the detection results output from battery remaining amount detector 195, latch opening/closing detector 170, and battery connection detector 194, respectively. By doing so, power controller 221 can switch a power supply source among first battery 91, second battery 92, and built-in battery 93. As described later, the control of first switch 211 and second switch 212 performed by power controller 221 enables battery replacement (hot swap function) while in operation of electronic device 1, and implements a function of automatically switching a power supply source to second battery 92 serving as an auxiliary battery from first battery 91 serving as a main battery.

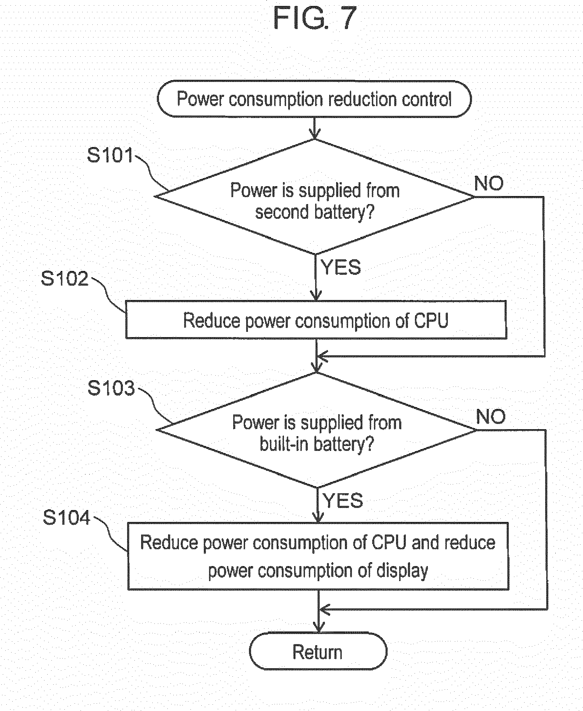

Power controller 221 can also control power for display 3 serving as a display, display controller 231 controlling display 3, and a central processing unit (CPU 241), as described later in detail with reference to FIG. 7.

Power controller 221 also controls LED controller 251 based on the detection results of battery remaining amount detector 195, latch opening/closing detector 170, and battery connection detector 194, and thus controlling on/off and an emission color of LED 8 (see FIG. 2).

Display controller 231 is a circuit controlling power consumption and display performed by display 3 under the control of power controller 221 and CPU 241.

Display 3 constituting a display for displaying information is a liquid crystal display, for example. Note that display 3 is not limited to a liquid crystal display.

CPU 241 is a central processing unit that controls the entire of electronic device 1. CPU 241 provides various functions to a user by executing an operating system and application software programs stored in a storage unit not illustrated.

LED controller 251 is a circuit controlling on/off and a display color of LED 8 provided on the bottom surface of main body 2 under the control of power controller 221.

LED 8 is a light-emitting diode that can emit light of a plurality of colors (e.g., red and green).

### [1-2. Operation]

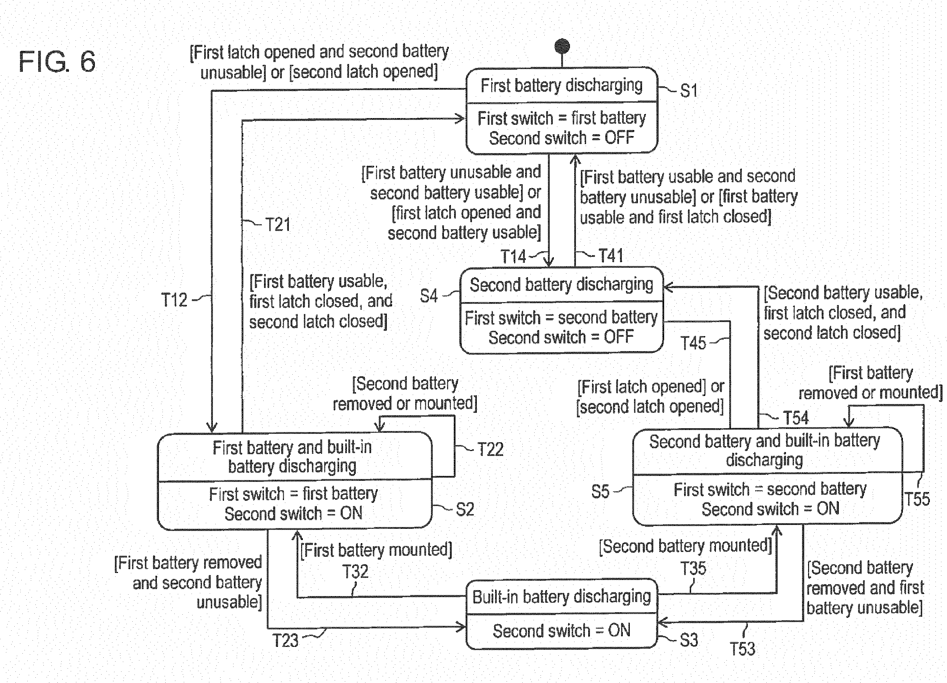

Next, an operation of electronic device 1 will be described with reference to a state transition diagram in FIG. 6 and a flowchart in FIG. 7. FIG. 6 is a state transition diagram for describing the control of first switch 211 and second switch 212 performed by power controller 221. FIG. 7 is a flowchart for describing power consumption reduction control performed by power controller 221 to CPU 241 and display 3. The state transition illustrated in FIG. 6 and the process illustrated in the flowchart in FIG. 7 are implemented through the execution of a predetermined program by power controller 221.

### [1-2-1. With respect to state S1]

Referring to FIG. 6, state S1 "first battery discharging" is firstly established. In state S1, power controller 221 controls first switch 211 so that first switch 211 is switched to first battery 91, and controls second switch 212 so that second switch 212 is turned off. According to this control, power is supplied to electronic device 1 from first battery 91 in state S1.

Notably, power controller 221 is supposed to receive, as needed, detection results from battery remaining amount detector 195, latch opening/closing detector 170, and battery connection detector 194 respectively in all states described below.

When power controller 221 determines that "first latch 71 is opened and second battery 92 is unusable" in state S1 based on the detection results of battery remaining amount detector 195, latch opening/closing detector 170, and battery connection detector 194, transition T12 is generated, so that a transition from state S1 to state S2 "first battery and built-in battery discharging" occurs. Note that the situation in which "second battery 92 is unusable" includes following two cases. One of them is such that second battery 92 is mounted to second battery mounting unit 192 but the remaining amount of second battery 92 is zero (or nearly zero) (or a ratio of the remaining amount of the second battery to the capacity of the second battery is not more than a predetermined value). The other case is such that second battery 92 is not mounted to second battery mounting unit 192. Power controller 221 determines whether or not "first latch 71 is opened" based on the detection result of latch opening/closing detector 170, and determines whether or not "second battery 92 is unusable" based on the detection results of battery remaining amount detector 195 and battery connection detector 194. Transition T12 is generated here when "first latch 71 is opened and second battery 92 is unusable", because there is a possibility of removal of first battery 91 which has been discharging in state S1 or a possibility of first battery 91 becoming unusable. Then, state S2 is established for adding discharge from built-in battery 93 to discharge from first battery 91 to prevent interruption of power supply to electronic device 1.

Note that "removal of battery" indicates a change from a state where a battery connection is established to a state where a battery connection is lost. Power controller 221 detects "removal" from the detection result of battery connection detector 194.

In addition, when power controller 221 determines that "second latch 72 is opened" in state S1 based on the detection result from latch opening/closing detector 170, transition T12 is also generated, so that the transition from state S1 to state S2 occurs. Transition T12 is generated here when "second latch 72 is opened", because there arises a possibility of removal of second battery 92 or a possibility of mounting of unusable second battery 92, and there is a possibility in which first battery 91 which has been discharging in state S1 becomes unusable. Then, state S2 is established for adding discharge from built-in battery 93 to discharge from first battery 91 to prevent interruption of power supply to electronic device 1.

Note that "mounting of battery" indicates a change from a state where a battery is not connected to a state where the battery is connected. Power controller 221 detects "mounting" from the detection result of battery connection detector 194.

When power controller 221 determines that "first battery 91 is unusable and second battery 92 is usable" in state S1 based on the detection results of battery remaining amount detector 195 and battery connection detector 194, transition T14 is generated, so that a transition from state S1 to state S4 "second battery discharging" occurs. Note that the situation in which "first battery 91 is unusable" includes following two cases. One of them is such that first battery 91 is mounted to first battery mounting unit 191 but the remaining amount of first battery 91 is zero (or nearly zero) (or a ratio of the remaining amount of the first battery to the capacity of the first battery is not more than a predetermined value). The other case is such that first battery 91 is not mounted to first battery mounting unit 191. In addition, the situation in which "second battery 92 is usable" indicates a case in which second battery 92 is mounted to second battery mounting unit 192 and the remaining amount of second battery 92 is not zero (or not nearly zero) (or a ratio of the remaining amount of second battery 92 to the capacity of second battery 92 exceeds a predetermined value). Power controller 221 determines whether or not "first battery 91 is unusable" and "second battery 92 is usable" based on the detection results of battery remaining amount detector 195 and battery connection detector 194. Transition T14 is generated here when "first battery 91 is unusable and second battery 92 is usable", in order to prevent interruption of power supply to electronic device 1 by switching to discharge from usable second battery 92 from discharge from unusable first battery 91.

In addition, when power controller 221 determines that "first latch 71 is opened and second battery 92 is usable" in state S1 based on the detection results of latch opening/closing detector 170 and battery connection detector 194, transition T14 is also generated, so that the transition from state S1 to state S4 occurs. Transition T14 is generated here when "the first latch is opened and second battery 92 is usable", because there arises a possibility of removal of first battery 91, and interruption of power supply to electronic device 1 is prevented by switching to discharge from usable second battery 92.

### [1-2-2. With respect to state S2]

In state S2, power controller 221 controls first switch 211 so that first switch 211 is switched to first battery 91, and controls second switch 212 so that second switch 212 is turned on. According to this control, power can be supplied to electronic device 1 from first battery 91 and built-in battery 93 in state S2.

When power controller 221 determines that "first battery 91 is usable, first latch 71 is closed, and second latch 72 is closed" in state S2 based on the detection results of battery remaining amount detector 195, latch opening/closing detector 170, and battery connection detector 194, transition T21 is generated, so that a transition from state S2 to state S1 occurs. The situation in which "first battery 91 is usable" indicates a case in which first battery 91 is mounted to first battery mounting unit 191 and the remaining amount of first battery 91 is not zero (or not nearly zero) (or a ratio of the remaining amount of first battery 91 to the capacity of first battery 91 exceeds a predetermined value). Power controller 221 determines whether or not "the first battery is usable" based on the detection results of battery remaining amount detector 195 and battery connection detector 194. Transition T21 is generated here when "first battery 91 is usable, first latch 71 is closed, and second latch 72 is closed", because there is no removal and mounting of second battery 92 and there is no possibility of removal of first battery 91 which is usable, resulting in that power supply to electronic device 1 can be continued only by the discharge from first battery 91.

When power controller 221 detects "removal or mounting of second battery 92" in state S2 based on the detection result of battery connection detector 194, state S2 is maintained (transition T22). Transition T22 is generated here when "removal or mounting of second battery 92" is detected, because there is a possibility of second battery 92 becoming unusable or a possibility of mounting of second battery 92, and there is no need to switch a battery to discharge.

When power controller 221 determines that "first battery 91 is removed and second battery 92 is unusable" in state S2 based on the detection results of battery remaining amount detector 195, latch opening/closing detector 170, and battery connection detector 194, transition T23 is generated, so that a transition from state S2 to state S3 "built-in battery discharging" occurs. Transition T23 is generated when "first battery 91 is removed and second battery 92 is unusable", because first battery 91 and second battery 92 are both in a state of being incapable of supplying power to electronic device 1, and thus, discharge is performed only by built-in battery 93.

### [1-2-3. With respect to state S3]

In state S3, power controller 221 controls second switch 212 so that second switch 212 is turned on. Note that first switch 211 may be arbitrarily set. According to this control, power can be supplied to electronic device 1 from built-in battery 93 in state S3.

When power controller 221 detects "mounting of first battery 91" based on the detection result of battery connection detector 194 in state S3, transition T32 is generated, so that a transition from state S3 to state S2 occurs. Transition T32 is generated here when "mounting of first battery 91" is detected, because the mounting of first battery 91 is confirmed, but whether first battery 91 is usable or not is not determined, and thus, discharge is performed by first battery 91 and built-in battery 93.

When power controller 221 detects "mounting of second battery 92" in state S3 based on the detection result of battery connection detector 194, transition T35 is generated, so that a transition from state S3 to state S5 "second battery and built-in battery discharging" occurs. Transition T35 is generated here when "mounting of second battery 92" is detected, because the mounting of second battery 92 is confirmed, but whether second battery 92 is usable or not is not determined, and thus, discharge is performed by second battery 92 and built-in battery 93.

### [1-2-4. With respect to state S4]

In state S4, power controller 221 controls first switch 211 so that first switch 211 is switched to second battery 92, and controls second switch 212 so that second switch 212 is turned off. According to this control, power is supplied to electronic device 1 from second battery 92 in state S4.

When power controller 221 determines that "first battery 91 is usable and second battery 92 is unusable" in state S4 based on the detection results of battery remaining amount detector 195 and battery connection detector 194, transition T41 is generated, so that a transition from state S4 to state S1 occurs. Transition T41 is generated here when "first battery 91 is usable and second battery 92 is unusable", in order to prevent interruption of power supply to electronic device 1 by switching to discharge from usable first battery 91 from discharge from unusable second battery 92.

When power controller 221 determines that "first battery 91 is usable and first latch 71 is closed" in state S4 based on the detection results of battery remaining amount detector 195, latch opening/closing detector 170, and battery connection detector 194, transition T41 is generated, so that a transition from state S4 to state S1 occurs. Transition T41 is generated here when "first battery 91 is usable and first latch 71 is closed", because there is no possibility of removal of first battery 91 which is usable, resulting in that power supply to electronic device 1 can be continued only by the discharge from first battery 91 which is a main power supply.

In addition, when power controller 221 determines that "first latch 71 is opened" in state S4 based on the detection result of latch opening/closing detector 170, transition T45 is generated, so that a transition from state S4 to state S5 "second battery and built-in battery discharging" occurs. Transition T45 is generated here when "first latch 71 is opened", because there arises a possibility of removal of first battery 91 or a possibility of mounting of unusable first battery 91, and there is a possibility in which second battery 92 which has been discharging in state S4 becomes unusable. Then, state S5 is established for adding discharge from built-in battery 93 to discharge from second battery 92 to prevent interruption of power supply to electronic device 1.

In addition, when power controller 221 determines that "second latch 72 is opened" in state S4 based on the detection result from latch opening/closing detector 170, transition T45 is also generated, so that a transition from state S4 to state S5 occurs. Transition T45 is generated here when "second latch 72 is opened", because there is a possibility of removal of second battery 92 which has been discharging in state S4 or a possibility of second battery 92 becoming unusable. Then, state S5 is established for adding discharge from built-in battery 93 to discharge from second battery 92 to prevent interruption of power supply to electronic device 1.

### [1-2-5. With respect to state S5]

In state S5, power controller 221 controls first switch 211 so that first switch 211 is switched to second battery 92, and controls second switch 212 so that second switch 212 is turned on. According to this control, power can be supplied to electronic device 1 from second battery 92 and built-in battery 93 in state S5.

When power controller 221 determines that "second battery 92 is usable, first latch 71 is closed, and second latch 72 is closed" in state S5 based on the detection results of battery remaining amount detector 195, latch opening/closing detector 170, and battery connection detector 194, transition T54 is generated, so that a transition from state S5 to state S4 occurs. Transition T54 is generated here when "second battery 92 is usable, first latch 71 is closed, and second latch 72 is closed", because there is no removal and mounting of first battery 91 and there is no possibility of removal of second battery 92 which is usable, resulting in that power supply to electronic device 1 can be continued only by the discharge from second battery 92.

When power controller 221 detects "removal or mounting of first battery 91" in state S5 based on the detection result of battery connection detector 194, state S5 is maintained (transition T55). Transition T55 is generated here when "removal or mounting of first battery 91" is detected, because there is a possibility of first battery 91 becoming unusable or a possibility of mounting of unusable first battery 91, and there is no need to switch a battery to discharge.

When power controller 221 determines that "second battery 92 is removed and first battery 91 is unusable" in state S5 based on the detection results of battery remaining amount detector 195, latch opening/closing detector 170, and battery connection detector 194, transition T53 is generated, so that a transition from state S5 to state S3 "built-in battery discharging" occurs. Transition T53 is generated here when "second battery 92 is removed and first battery 91 is unusable", because first battery 91 and second battery 92 are both in a state of being incapable of supplying power to electronic device 1, and thus, discharge is performed only by built-in battery 93.

As described above, power controller 221 controls first switch 211 and second switch 212 based on the detection results of battery remaining amount detector 195, latch opening/closing detector 170, and battery connection detector 194. According to this configuration, if one of first battery 91 and second battery 92 becomes unusable, for example, power supply from the other battery is automatically started (transition T14 and transition T41), and thus continuous drive for a long time can be implemented. In addition, if at least one of first latch 71 and second latch 72 is opened, for example, electronic device 1 is automatically brought into a state of being capable of receiving power supply from built-in battery 93 (transition T12 and transition T45), by which a hot swap function can be implemented.

### [1-2-6. With respect to power consumption reduction control]

Besides the control for first switch 211 and second switch 212 described above, power controller 221 performs control for reducing power consumption of electronic device 1. FIG. 7 is a flowchart for power consumption reduction control executed by power controller 221.

Power controller 221 repeatedly executes the process illustrated in FIG. 7 in parallel with the control for first switch 211 and second switch 212 described above. Power controller 221 determines whether or not power is supplied from second battery 92 (step S101). When power is supplied from second battery 92, power controller 221 changes an operating mode of CPU 241 to a power saving mode to reduce power consumption of CPU 241 (step S102). Specifically, a drive frequency of CPU 241 may be reduced, and a method for reducing power consumption is not limited thereto. The determination of whether or not power is supplied from second battery 92 here is made based on whether or not first switch 211 is switched to second battery 92. State S4 and the like in the state transition diagram in FIG. 6 correspond to the state where power is supplied only from second battery 92. Note that, in step S102, control for reducing power consumption of display 3 may be performed in place of (or in addition to) changing CPU 241 into the power saving mode.

In addition, power controller 221 determines whether or not power is supplied from built-in battery 93 (step S103). If power is supplied from built-in battery 93, power controller 221 reduces power consumption of CPU 241, and reduces display luminance of display 3 through display controller 231 to reduce power consumption of the display (display 3) (step S104). The determination of whether or not power is supplied from built-in battery 93 here may be made based on whether or not second switch 212 is turned on. States S2, S3, and S5 in the state transition diagram in FIG. 6 correspond to the state where power is supplied from built-in battery 93. Note that, in step S104, only one of the reduction in power consumption of CPU 241 and the reduction in power consumption of the display (display 3) may be performed.

As described above, when power is supplied from second battery 92 or built-in battery 93 having relatively smaller capacity than first battery 91, power controller 221 performs control for reducing power consumption of electronic device 1. According to this control, an operable time of electronic device 1 can further be increased.

### [1-3. Effects and other benefits]

Electronic device 1 according to the present exemplary embodiment can be equipped with three batteries which are first battery 91, second battery 92, and built-in battery 93, and can automatically switch a battery as a power supply source as appropriate, thus being capable of being continuously driven for a long time. In addition, when first latch 71 or second latch 72 is opened, electronic device 1 is automatically in a state of being capable of receiving power supply from built-in battery 93. Thus, a so-called hot swap function can be implemented.

The first exemplary embodiment has been described above and exemplified as the technology disclosed in the present application. However, the technology of the present disclosure is not limited to the above described first exemplary embodiment, but is applicable to another exemplary embodiment where a modification, a replacement, an addition, or an omission has been made appropriately.

The first exemplary embodiment describes that electronic device 1 can be equipped with three batteries which are first battery 91, second battery 92, and built-in battery 93. However, the number of batteries which can be mounted is not limited to three. Electronic device 1 can be equipped with three or more batteries.

The first exemplary embodiment describes that power controller 221 is an EC microcontroller. However, power controller 221 may be the one that controls on/off of LED 8.

The first exemplary embodiment describes that electronic device 1 has battery connection detector 194. However, battery connection detector 194 is not an essential component for electronic device 1. This is because, as for at least the determination of whether a battery is usable or not, the result same as the result in the first exemplary embodiment can be obtained without consideration of whether a battery is mounted or not. If a battery is not mounted, the detection result of battery remaining amount detector 195 shows a remaining amount of zero. Therefore, even if it is determined whether or not a battery is usable using only the detection result of battery remaining amount detector 195, the result same as the result in the first exemplary embodiment is obtained.

The exemplary embodiments have been described above and exemplified as the technology of the present disclosure. The accompanying drawings and detailed description have been provided for this purpose.

Accordingly, the components described in the appended drawings and the detailed descriptions include, in order to exemplifying the above described technology, not only essential components, but also components that are not essential. Therefore, it should not immediately be construed that these components that are not essential are essential because the components are described in the appended drawings and the detailed descriptions.

Since the above described exemplary embodiments are for exemplifying the technology of the present disclosure, various modifications, replacements, additions, and omissions can be made within the scope of the appended claims or of their equivalents.

As described above, the present disclosure is applicable to a battery-drivable electronic device.

### REFERENCE MARKS IN THE DRAWINGS

- 1: electronic device
- 2: main body
- 3: display
- 4: keyboard
- 5: pointing device
- 8: light-emitting diode
- 7: 1first latch
- 72: second latch
- 91: first battery
- 92: second battery
- 93: built-in battery
- 170: latch opening/closing detector
- 191: first battery mounting unit
- 192: second battery mounting unit
- 194: battery connection detector
- 195: battery remaining amount detector
- 201: diode
- 202: diode
- 203: diode
- 211: first switch
- 212: second switch
- 221: power controller
- 231: display controller
- 241: central processing unit (CPU)
- 251LED: controller

## Claims

1. An electronic device (1) which is operable by power supplied from a battery, the electronic device (1) comprising:
a first mounting unit (191) to which a first battery (91) is mounted in a detachable manner;
a second mounting unit (192) to which a second battery (92) different from the first battery (91) is mounted in a detachable manner;
a built-in battery (93) incorporated in a main body (2);
a first switch (211) configured to alternatively select a battery for supplying power to the electronic device (1) from the first battery (91) mounted to the first mounting unit (191) and the second battery (92) mounted to the second mounting unit (192);
a second switch (212) configured to switch on and off a supply of power from the built-in battery (93) to the electronic device (1);
a first latch (71) configured to lock the first battery (91) mounted to the first mounting unit (191);
a second latch (72) configured to lock the second battery (92) mounted to the second mounting unit (192);
a latch opening/closing detector (170) configured to detect opening/closing of the first latch (71) and the second latch (72);
a battery remaining amount detector (195) configured to detect remaining amounts of the first battery (91) and the second battery (92); and
a power controller (221) configured to control the first switch (211);
the power controller (221) is further configured to control the first switch (211) based on detection results of the latch opening/closing detector (170) and the battery remaining amount detector (195);
**characterized in that** the power controller (221) is further configured to control the second switch (212) based on detection results of the latch opening/closing detector (170) and the battery remaining amount detector (195);
wherein when the latch opening/closing detector (170) detects opening of at least one of the first latch (71) and the second latch (72), the power controller (221) is further configured:
to control the second switch (212) so that the built-in battery (93) is capable of supplying power to the electronic device (1), and
to control the first switch (211) so that power is supplied to the electronic device (1) from one of the first battery (91) and the second battery (92) which can supply power based on a detection result of the battery remaining amount detector (195).

2. The electronic device (1) according to claim 1, wherein
the power controller (221) is further configured to:
determine that the first battery (91) is capable of supplying power to the electronic device (1) when the battery remaining amount detector (195) detects that a ratio of a remaining amount of the first battery (91) to a capacity of the first battery (91) is larger than a predetermined value; and
determine that the second battery (92) is capable of supplying power to the electronic device (1) when the battery remaining amount detector (195) detects that a ratio of a remaining amount of the second battery (92) to a capacity of the second battery (92) is larger than a predetermined value.

3. The electronic device (1) according to claim 1, wherein
when the latch opening/closing detector (170) is further configured to detect the first latch (71) being opened with a detection result of the battery remaining amount detector (195) showing that the second battery (92) is capable of supplying power to the electronic device (1), wherein the power controller (221) is further configured to control the first switch (211) so that the second battery (92) can supply power to the electronic device (1).

4. The electronic device (1) according to claim 3, wherein
the power controller (221) is further configured to determine that the second battery (92) is capable of supplying power to the electronic device (1), when the battery remaining amount detector (195) detects that a ratio of a remaining amount of the second battery (92) to a capacity of the second battery (92) is larger than a predetermined value.

5. The electronic device (1) according to claim 1, further comprising:
a battery connection detector (194) configured to detect whether or not each of the first battery (91) and the second battery (92) is mounted to the first mounting unit (191) and the second mounting unit (192),
wherein, in a state where the second switch (212) is controlled so that the built-in battery (93) can supply power to the electronic device (1):
the power controller (221) is further configured to control the first switch (211) so that the first battery (91) can supply power to the electronic device (1), when a detection result of the battery connection detector (194) shows that the first battery (91) is mounted to the first battery mounting unit (191), and
the power controller (221) is further configured to control the first switch (211) so that the second battery (92) can supply power to the electronic device (1), when a detection result of the battery connection detector (194) shows that the second battery (92) is mounted to the second battery mounting unit (192).

6. The electronic device (1) according to any one of claims 1 to 5, further comprising:
a central processing unit (241) configured to control an operation of the electronic device (1),
wherein power capable of being supplied from the second battery (92) is smaller than power capable of being supplied from the first battery (91), and
when power is supplied from the second battery (92), the power controller (221) is further configured to control the central processing unit (241) so that power consumption of the central processing unit (241) is reduced.

7. The electronic device (1) according to any one of claims 1 to 5, further comprising:
a central processing unit (241) configured to control an operation of the electronic device (1); and
a display (3) configured to display information,
wherein the power controller (221) is further configured to control the central processing unit (241) and the display (3) so that power consumption of at least one of the central processing unit (241) and the display (3) is reduced, when power is supplied from the built-in battery (93).

8. The electronic device (1) according to claim 6, further comprising a display (3) configured to display information,
wherein the power controller (221) is further configured to control the central processing unit (241) and the display (3) so that power consumption of at least one of the central processing unit (241) and the display (3) is reduced, when power is supplied from the built-in battery (93).

## Patentansprüche

1. Elektronisches Gerät (1), das mit von einer Batterie geliefertem Strom betreibbar ist, wobei das elektronische Gerät (1) umfasst:
eine erste Montageeinheit (191, an die eine erste Batterie (91) auf eine abnehmbare Weise montiert ist;
eine zweite Montageeinheit (192, an die eine zweite Batterie (92) verschieden von der ersten Batterie (91) auf eine abnehmbare Weise montiert ist;
eine in einem Hauptkörper (2) enthaltene eingebaute (93) Batterie;
einen zum alternativen Auswählen einer Batterie zum Liefern von Strom an das elektronische Gerät (1) von der an der ersten Montageeinheit (191) montierten ersten Batterie (91) und der an der zweiten Montageeinheit (192) montierten zweiten Batterie (92) ausgebildeten ersten Schalter (211);
einen zum Ein- und Ausschalten eines Lieferns von Strom von der eingebauten Batterie (93) an das elektronische Gerät (1) ausgebildeten zweiten Schalter (212);
ein zum Verriegeln der an der ersten Montageeinheit (191) montierten ersten Batterie (91) ausgebildetes erstes Schloss (71);
ein zum Verriegeln der an der zweiten Montageeinheit (192) montierten zweiten Batterie (92) ausgebildetes zweites Schloss (72);
einen zum Erfassen des Öffnens/Schließens des ersten Schlosses (71) und des zweiten Schlosses (72) ausgebildeten Schloss-Öffnungs-/Schließ-Detektor (170);
einen zum Erfassen der Restmengen der ersten Batterie (91) und der zweiten Batterie (92) ausgebildeten Batterierestmengen-Detektor (195); und
ein zum Steuern des ersten Schalters (211) ausgebildetes Stromsteuergerät (221);
wobei das Stromsteuergerät (221) ferner zum Steuern des ersten Schalters (211) auf der Basis von Erfassungsergebnissen des Schloss-Öffnungs-/Schließ-Detektors (170) und des Batterierestmengen-Detektors (195) ausgebildet ist;
**dadurch gekennzeichnet, dass** das Stromsteuergerät (221) ferner zum Steuern des zweiten Schalters (212) auf der Basis von Erfassungsergebnissen des Schloss-Öffnungs-/Schließ-Detektors (170) und des Batterierestmengen-Detektors (195) ausgebildet ist;
wobei, wenn der Schloss-Öffnungs-/Schließ-Detektor (170) das Öffnen des ersten Schlosses (71) oder/und des zweiten Schlosses (72) erfasst, das Stromsteuergerät (221) ferner ausgebildet ist:
zum Steuern des zweiten Schalters (212), so dass die eingebaute Batterie (93) fähig zum Liefern von Strom an das elektronische Gerät (1) ist, und
zum Steuern des ersten Schalters (211), so dass Strom an das elektronische Gerät (1) von der ersten Batterie (91) oder der zweiten Batterie (92) geliefert wird, die Strom auf der Basis eines Erfassungsergebnisses des Batterierestmengen-Detektors (195) liefern kann.

2. Elektronisches Gerät (1) nach Anspruch 1, wobei das Stromsteuergerät (221) ferner ausgebildet ist zum:
Bestimmen, dass die erste Batterie (91) fähig zum Liefern von Strom an das elektronische Gerät (1) ist, wenn der Batterierestmengen-Detektor (195) erfasst, dass ein Verhältnis einer Restmenge der ersten Batterie (91) zu einer Kapazität der ersten Batterie (91) größer ist als ein vorgegebener Wert; und
Bestimmen, dass die zweite Batterie (92) fähig zum Liefern von Strom an das elektronische Gerät (1) ist, wenn der Batterierestmengen-Detektor (195) erfasst, dass ein Verhältnis einer Restmenge der zweiten Batterie (92) zu einer Kapazität der zweiten Batterie (92) größer ist als ein vorgegebener Wert;

3. Elektronisches Gerät (1) nach Anspruch 1, wobei
der Schloss-Öffnungs-/Schließ-Detektor (170) ferner zum Erfassen, dass das erste Schloss (71) geöffnet wird, mit einem Erfassungsergebnis des Batterierestmengen-Detektors (195) zum Anzeigen, dass die zweite Batterie (92) Strom an das elektronische Gerät (1) liefern kann, ausgebildet ist, wobei das Stromsteuergerät (221) ferner zum Steuern des ersten Schalters (211) ausgebildet ist, so dass die zweite Batterie (92) Strom an das elektronische Gerät (1) liefern kann.

4. Elektronisches Gerät (1) nach Anspruch 3, wobei
das Stromsteuergerät (221) ferner zum Bestimmen, dass die zweite Batterie (92) fähig zum Liefern von Strom an das elektronische Gerät (1) ist, wenn der Batterierestmengen-Detektor (195) erfasst, dass ein Verhältnis einer Restmenge der zweiten Batterie (92) zu einer Kapazität der zweiten Batterie (92) größer ist als ein vorgegebener Wert, ausgebildet ist.

5. Elektronisches Gerät (1) nach Anspruch 1, ferner umfassend:
einen zum Erfassen, ob die erste Batterie (91) und die zweite Batterie (92) an der ersten Montageeinheit (191) und der zweiten Montageeinheit (192) montiert sind, ausgebildeten Batterieanschlussdetektor (194),
wobei in einem Zustand, in dem der zweite Schalter (212) so gesteuert wird, dass die eingebaute Batterie (93) Strom an das elektronische Gerät (1) liefern kann:
das Stromsteuergerät (221) ferner zum Steuern des ersten Schalters (211) ausgebildet ist, so dass die erste Batterie (91) Strom an das elektronische Gerät (1) liefern kann, wenn ein Erfassungsergebnis des Batterieanschlussdetektors (194) zeigt, dass die erste Batterie (91) an der ersten Batteriemontageeinheit (191) montiert ist, und
das Stromsteuergerät (221) ferner zum Steuern des ersten Schalters (211) ausgebildet ist, so dass die zweite Batterie (92) Strom an das elektronische Gerät (1) liefern kann, wenn ein Erfassungsergebnis des Batterieanschlussdetektors (194) zeigt, dass die zweite Batterie (92) an der zweiten Batteriemontageeinheit (192) montiert ist.

6. Elektronisches Gerät (1) nach einem der Ansprüche 1 bis 5, ferner umfassend:
eine zum Steuern eines Betriebs des elektronischen Geräts (1) ausgebildete zentrale Verarbeitungseinheit (241),
wobei Strom, der von der zweiten Batterie (92) geliefert werden kann, kleiner ist als Strom, der von der ersten Batterie (91) geliefert werden kann, und
wenn Strom von der zweiten Batterie (92) geliefert wird, das Stromsteuergerät (221) ferner zum Steuern der zentralen Verarbeitungseinheit (241) ausgebildet ist, so dass der Stromverbrauch der zentralen Verarbeitungseinheit (241) verringert wird.

7. Elektronisches Gerät (1) nach einem der Ansprüche 1 bis 5, ferner umfassend:
eine zum Steuern eines Betriebs des elektronischen Geräts (1) ausgebildete zentrale Verarbeitungseinheit (241); und
eine zum Anzeigen von Information ausgebildete Anzeige (3),
wobei das Stromsteuergerät (221) ferner zum Steuern der zentralen Verarbeitungseinheit (241) und der Anzeige (3) ausgebildet ist, so dass der Stromverbrauch der zentralen Verarbeitungseinheit (241) oder/und der Anzeige (3) verringert wird, wenn Strom von der eingebauten Batterie (93) geliefert wird.

8. Elektronisches Gerät (1) nach Anspruch 6, ferner umfassend eine zum Anzeigen von Information ausgebildete Anzeige (3),
wobei das Stromsteuergerät (221) ferner zum Steuern der zentralen Verarbeitungseinheit (241) und der Anzeige (3) ausgebildet ist, so dass der Stromverbrauch der zentralen Verarbeitungseinheit (241) oder/und der Anzeige (3) verringert wird, wenn Strom von der eingebauten Batterie (93) geliefert wird.

## Revendications

1. Dispositif électronique (1) qui peut être activé par de l'énergie alimentée par une batterie, le dispositif électronique (1) comprenant :
une première unité de montage (191) sur laquelle une première batterie (91) est montée d'une manière amovible ;
une seconde unité de montage (192) sur laquelle une seconde batterie (92) différente de la première batterie (91) est montée d'une manière amovible ;
une batterie intégrée (93) incorporée dans un corps principal (2) ;
un premier commutateur (211) configuré pour sélectionner alternativement une batterie pour alimenter en énergie le dispositif électronique (1) parmi la première batterie (91) montée sur la première unité de montage (191) et la seconde batterie (92) montée sur la seconde unité de montage (192) ;
un second commutateur (212) configuré pour activer et désactiver une alimentation en énergie depuis la batterie intégrée (93) au dispositif électronique (1) ;
une premier verrou (71) configuré pour bloquer la première batterie (91) montée sur la première unité de montage (191) ;
un second verrou (72) configuré pour bloquer la seconde batterie (92) montée sur la seconde unité de montage (192) ;
un détecteur d'ouverture/fermeture de verrou (170) configuré pour détecter une ouverture/fermeture du premier verrou (71) et du second verrou (72) ;
un détecteur de quantités restantes de batteries (195) configuré pour détecter des quantités restantes de la première batterie (91) et de la seconde batterie (92) ; et
un dispositif de commande d'énergie (221) configuré pour commander le premier commutateur (211) ;
le dispositif de commande d'énergie (221) est en outre configuré pour commander le premier commutateur (211) sur la base de résultats de détection du détecteur d'ouverture/fermeture de verrou (170) et du détecteur de quantités restantes de batteries (195) ;
**caractérisé en ce que** le dispositif de commande d'énergie (221) est en outre configuré pour commander le second commutateur (212) sur la base de résultats de détection du détecteur d'ouverture/fermeture de verrou (170) et du détecteur de quantités restantes de batteries (195) ;
dans lequel, lorsque le détecteur d'ouverture/fermeture de verrou (170) détecte l'ouverture d'au moins l'un parmi le premier verrou (71) et le second verrou (72), le dispositif de commande d'énergie (221) est en outre configuré :
pour commander le second commutateur (212) de sorte que la batterie intégrée (93) est capable d'alimenter en énergie le dispositif électronique (1), et
pour commander le premier commutateur (211) de sorte que de l'énergie est alimentée au dispositif électronique (1) par l'une parmi la première batterie (91) et la seconde batterie (92) pouvant alimenter de l'énergie sur la base d'un résultat de détection du détecteur de quantités restantes de batteries (195).

2. Dispositif électronique (1) selon la revendication 1, dans lequel
le dispositif de commande d'énergie (221) est en outre configuré pour :
déterminer que la première batterie (91) est capable d'alimenter en énergie le dispositif électronique (1) lorsque le détecteur de quantités restantes de batteries (195) détecte qu'un rapport entre une quantité restante de la première batterie (91) et une capacité de la première la batterie (91) est supérieur à une valeur prédéterminée ; et
déterminer que la seconde batterie (92) est capable d'alimenter en énergie le dispositif électronique (1) lorsque le détecteur de quantités restantes de batteries (195) détecte qu'un rapport entre une quantité restante de la seconde batterie (92) et une capacité de la seconde batterie (92) est supérieur à une valeur prédéterminée.

3. Dispositif électronique (1) selon la revendication 1, dans lequel
lorsque le détecteur d'ouverture/fermeture de verrou (170) est en outre configuré pour détecter que le premier verrou (71) est ouvert avec un résultat de détection du détecteur de quantités restantes de batteries (195) montrant que la seconde batterie (92) est capable d'alimenter en énergie le dispositif électronique (1), dans lequel le dispositif de commande d'énergie (221) est en outre configuré pour commander le premier commutateur (211) de sorte que la seconde batterie (92) peut alimenter en énergie le dispositif électronique (1).

4. Dispositif électronique (1) selon la revendication 3, dans lequel
le dispositif de commande d'énergie (221) est en outre configuré pour déterminer que la seconde batterie (92) est capable d'alimenter en énergie le dispositif électronique (1), lorsque le détecteur de quantités restantes de batteries (195) détecte qu'un rapport entre une quantité restante de la seconde batterie (92) et une capacité de la seconde batterie (92) est supérieur à une valeur prédéterminée.

5. Dispositif électronique (1) selon la revendication 1, comprenant en outre :
un détecteur de connexion de batteries (194) configuré pour détecter si chacune parmi la première batterie (91) et la seconde batterie (92) est montée ou non sur la première unité de montage (191) et sur la seconde unité de montage (192),
dans lequel, dans un état où le second commutateur (212) est commandé de sorte que la batterie intégrée (93) peut alimenter en énergie le dispositif électronique (1) :
le dispositif de commande d'énergie (221) est en outre configuré pour commander le premier commutateur (211) de sorte que la première batterie (91) peut alimenter en énergie le dispositif électronique (1), lorsqu'un résultat de détection du détecteur de connexion de batteries (194) montre que la première batterie (91) est montée sur la première unité de montage de batterie (191), et
le dispositif de commande d'énergie (221) est en outre configuré pour commander le premier commutateur (211) de sorte que la seconde batterie (92) peut alimenter en énergie le dispositif électronique (1), lorsqu'un résultat de détection du détecteur de connexion de batteries (194) montre que la seconde batterie (92) est montée sur la seconde unité de montage de batterie (192).

6. Dispositif électronique (1) selon l'une quelconque des revendications 1 à 5, comprenant en outre :
une unité de traitement centrale (241) configurée pour commander un fonctionnement du dispositif électronique (1),
dans lequel une énergie pouvant être alimentée par la seconde batterie (92) est inférieure à une énergie pouvant être alimentée par la première batterie (91), et lorsque une énergie est alimentée par la seconde batterie (92), le dispositif de commande d'énergie (221) est en outre configuré pour commander l'unité de traitement centrale (241) de sorte qu'une consommation en énergie de l'unité de traitement centrale (241) est réduite.

7. Dispositif électronique (1) selon l'une quelconque des revendications 1 à 5, comprenant en outre :
une unité de traitement centrale (241) configurée pour commander un fonctionnement du dispositif électronique (1) ; et
un affichage (3) configuré pour afficher des informations,
dans lequel le dispositif de commande d'énergie (221) est en outre configuré pour commander l'unité de traitement centrale (241) et l'affichage (3) de manière à réduire une consommation en énergie d'au moins l'un parmi l'unité de traitement centrale (241) et l'affichage (3), lorsque l'énergie est alimentée par la batterie intégrée (93).

8. Dispositif électronique (1) selon la revendication 6, comprenant en outre un affichage (3) configuré pour afficher des informations,
dans lequel le dispositif de commande d'énergie (221) est en outre configuré pour commander l'unité de traitement centrale (241) et l'affichage (3) de manière à réduire une consommation en énergie d'au moins l'un parmi l'unité de traitement centrale (241) et l'affichage (3), lorsque l'énergie est alimentée par la batterie intégrée (93).
